# EUROPEAN PATENT SPECIFICATION

(11) **EP 4 420 453 B1**
(45) Date of publication and mention of the grant of the patent: **22.10.2025**
(21) Application number: 21962818.7
(22) Date of filing: 03.11.2021
(51) Int. Cl.: H04L 5/00, H04B 7/06, H04W 72/0453, H04W 84/12

(54) **DEVICES AND METHODS FOR PUNCTURED TRANSMISSION IN A WIRELESS NETWORK**
VORRICHTUNGEN UND VERFAHREN ZUR PUNKTIERTEN ÜBERTRAGUNG IN EINEM DRAHTLOSEN NETZWERK
DISPOSITIFS ET PROCÉDÉS DE TRANSMISSION POINÇONNÉE DANS UN RÉSEAU SANS FIL

(43) Date of publication of application: 28.08.2024
(73) Proprietor: Huawei Technologies Co., Ltd., Shenzhen, Guangdong 518129 (CN)
(72) Inventor: EPSTEIN, Avner, 80992 Munich (DE); SHILO, Shimon, 80992 Munich (DE); KLEIN, Arik, 80992 Munich (DE); REDLICH, Oded, 80992 Munich (DE); YU, Jian, Shenzhen, Guangdong 518129 (CN); EZRI, Doron, 80992 Munich (DE)
(74) Representative: Isarpatent
(86) International application number: PCT/CN2021/128381
(87) International publication number: WO 2023/077298

(56) References cited:
- WO-A1-2021/006495
- WO-A1-2022/220455
- CN-A- 109 547 072
- KR-A- 20160 035 542
- US-A1- 2017 070 914
- US-A1- 2017 079 027
- US-A1- 2024 106 613
- WOOK BONG LEE (SAMSUNG): "D0.3 CR for Spatial Stream And MIMO Enhancement", vol. 802.11 EHT; 802.11be, no. 4, 8 April 2021 (2021-04-08), pages 1 - 30, XP068179651, Retrieved from the Internet <URL:https://mentor.ieee.org/802.11/dcn/21/11-21-0272-04-00be-d0-3-cr-for-spatial-stream-and-mimo-enhancement.docx> [retrieved on 20210408]
- "9. Frame formats 9.2 MAC frame formats 9.2.4 Frame fields 9.2.4.1 Frame Control field 9.2.4.1.8 More Data subfield", vol. 802.11be drafts, no. D1.1, 23 July 2021 (2021-07-23), pages 1 - 106, XP068183923, Retrieved from the Internet <URL:http://grouper.ieee.org/groups/802/11/private/Draft_Standards/11be/Draft%20P802.11be_D1.1%20-%20Word.zip TGbe_Cl_09.doc> [retrieved on 20210723]

## Description

### TECHNICAL FIELD

The present disclosure relates to wireless communications. More specifically, the present disclosure relates to devices and methods for punctured transmission in a wireless communication network.

### BACKGROUND

IEEE 802.11-based WLANs (also referred to as Wi-Fi networks) have become popular at an unprecedented rate. The IEEE802.11be standard has added support for very large bandwidths of 320 MHz to be used for Wi-Fi transmissions. Such a large BW is most likely to be interfered by other networks or transmitters that are sharing the wireless medium. These interfering signals may be caused by other Wi-Fi networks that are operating in the same or proximate geographic location and on the same BSS channel (or part thereof) of the current BSS (i.e. OBSS) or by non Wi-Fi sources. For handling such interference, the IEEE802.11be standard defines puncturing schemes that enable transmission over the whole large bandwidth by excluding only the subchannels affected by interference.

The puncturing granularity is 20 MHz, meaning that certain 20 MHz subchannels within the total BW of the BSS may either be regarded as free or occupied depending on the received power level from the interference source(s) in those specific 20 MHz subchannels. The IEEE802.11 standard defines power threshold levels for the primary and secondary 20 MHz subchannels that define when a 20 MHz subchannel is regarded as busy or free due to a valid Wi-Fi, i.e. IEEE802.11 signal or other non-Wi-Fi signals.

WOOK BONG LEE (SAMSUNG): "D0.3 CR for Spatial Stream And MIMO Enhancement", IEEE DRAFT; 11-21-0272-04-00BE-D0-3-CR-FOR-SPATIAL-STREAM-AND-MIMO-ENHANCEMENT, IEEE-SA MENTOR, PISCATAWAY, NJ USA, vol. 802.11 EHT; 802.11be, no. 4 8 April 2021 (2021-04-08), pages 1-30, XP068179651, Retrieved from the Internet: URL:https://mentor.ieee.org/802.11/don/21/11-21-0272-04-00be-dO-3-cr-for-spatial-stream-and-mimo-enhancement.docx, discusses a Partial BW Info subfield and an STA Info field.

"9. Frame formats 9.2 MAC frame formats 9.2.4 Frame fields 9.2.4.1 Frame Control field 9.2.4.1.8 More Data subfield", IEEE DRAFT; TGBE_CL_09, IEEE-SA, PISCATAWAY, NJ USA, vol. 802.11be drafts, no. D1.1 23 July 2021 (2021-07-23), pages 1-106, XP068183923, Retrieved from the Internet: URL:http://grouper.ieee.org/groups/802/11/private/Draft_Standards/11be/Draft%20P802.11be_D1.1%20 %20Word.zipTGbe_Cl_09.doc, discusses that an STA Info field contains a disallowed subchannel bitmap if an NDPA frame is an HE variant.

Post-published WO 2022/220455 A1 describes a method and a device for transmitting a feedback frame in a wireless LAN system are proposed. Specifically, a reception STA receives an NDPA frame from a transmission STA through a 320 MHz band. The reception STA receives an NDP frame from the transmission STA. The reception STA transmits a feedback frame to the transmission STA on the basis of the NDPA frame and the NDP frame. The NDPA frame includes information on a partial band. The information on the partial band includes a bitmap configured by one to nine bits. The reception STA is an STA operating only in 20 MHz.

### SUMMARY

It is an objective to provide improved devices and methods for implementing puncturing schemes in a wireless communication network, in particular an IEEE 802.11 based wireless communication network.

The foregoing and other objectives are achieved by the subject matter of the independent claims. Further implementation forms are apparent from the dependent claims, the description and the figures.

According to a first aspect, an access point, AP, is provided, wherein the AP is configured to perform a sounding procedure with one or more associated non-AP stations (also referred to as users) in a wireless local area network (WLAN). The WLAN may be a WLAN in accordance with 802.11

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows an exemplary wireless communication network including an AP and a plurality of non-AP stations according to an embodiment;
Fig. 2 shows a schematic diagram illustrating the current effect of using only non-OFDMA puncturing pattern of the disabled Subchannel bitmap indication according to an embodiment;
Fig. 3 shows a schematic diagram illustrating part of the exchanged frames between an AP and a plurality of non-AP stations during a Triggered Based sounding sequence used for OFDMA scheduling;
Fig. 4a shows a station info field of a NDPA frame generated by an AP according to an embodiment during a sounding procedure;
Fig. 4b shows more details of a partial BW info subfield of the station info field of figure 5a;
Fig. 5 shows a table listing rules for determining the resolution and/or range of a feedback bitmap in the station info field of figure 4a;
Fig. 6 shows a MIMO control field of a CBFR frame generated by a non-AP station during a sounding procedure according to an embodiment;
Fig. 7a shows a station info field and a further station info field of a NDPA frame generated by an AP during a sounding procedure, according to an embodiment;
Fig. 7b shows a table listing rules for determining the resolution and/or range of a feedback bitmap and a further feedback bitmap in the station info field and the further station info field of figure 7a;
Fig. 8a shows a MIMO control field of a CBFR frame generated by a non-AP station during a sounding procedure according to a further embodiment;
Fig. 8b shows a table listing rules for determining the resolution and/or range of a response feedback bitmap in the MIMO control field of figure 8a;
Fig. 9a shows a station info field and a further station info field of a NDPA frame generated by an AP during a sounding procedure according to a further embodiment;
Fig. 9b shows a table listing rules for determining the number of the STA Info fields per specific STA and the resolution and/or range of a feedback bitmap and a further feedback bitmap (if used) in the station info field and the further station info field of figure 9a;
Fig. 10a shows a station info field and a further station info field of a NDPA frame generated by an AP during a sounding procedure according to a further embodiment;
Fig. 10b shows a table listing rules for determining the number of the STA Info fields per specific STA and the resolution and/or range of a feedback bitmap and a further feedback bitmap (if used) in the station info field and the further station info field of figure 10a;
Fig. 11a shows a MIMO control field of a CBFR frame generated by a non-AP station during a sounding procedure according to a further embodiment;
Fig. 11b shows a table listing rules for determining whether further Partial BW Info is required and the resolution and/or range of a response feedback bitmap based on the MIMO control field of figure 11a;
Fig. 12 shows a table illustrating rules for determining a feedback bitmap indication setting according to an embodiment;
Fig. 13 shows a table illustrating two embodiments for determining a feedback bitmap indication setting;
Fig. 14 is a flow diagram illustrating a method of operating an AP according to an embodiment; and
Fig. 15 is a flow diagram illustrating a method of operating a non-AP station according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Before describing different embodiments in more detail, in the following some technical background as well as terminology concerning wireless transmitters, in particular wireless transmitters in accordance with the IEEE 802.11 WLAN standard will be introduced making use of one or more of the following abbreviations:
- CBFR: Compressed Beamforming Report
- CCA: Clear Channel Assessment
- DL: Downlink
- UL: Uplink
- BFee: Beamformee
- BFer: Beamformer
- BFR: Beamforming Report
- BFRP: Beamforming Report Poll
- BSS: Basic Serving Set
- AP: Access Point
- EHT: Extremely High-Throughput (the feature introduced by IEEE802.11be)
- HE: High Efficiency (the feature introduced by IEEE802.11ax)
- PHY: Physical Layer
- MAC: Medium Access Control
- MIMO: Multiple Input Multiple Output
- MU: Multi User
- NDP: Null Data PPDU
- NDPA: NDP Announcement
- OBSS: Overlapping BSS
- OFDMA: Orthogonal Frequency Division Multiple Access
- PPDU: PHY Protocol Data Unit
- STA: Station (in general, can be either an AP STA or a non-AP STA)
- SU: Single User
- TXOP: Transmit Opportunity
- TF: Trigger Frame

As used herein, a Sounding NDP is a PPDU which contains a preamble, including Long Training Fields (LTFs), and no MAC payload which is used for estimating the physical channel between an AP and a non-AP station so that precoder parameters can be computed.

As used herein, an NDPA frame is a frame which is transmitted before a Sounding NDP, indicating some of the parameters of the Sounding NDP (e.g. the type of feedback required), which STAs need to measure the sounding report, what parameters should these STAs use for the measurement, etc.

As used herein, a BFR frame is a frame which carries the measured feedback/precoding parameters, such as a precoding vector or matrix, SNR corresponding to each precoder, etc.

As used herein, a TF, as introduced by 802.11ax, is a frame to trigger one or more non-AP stations to transmit simultaneously and in synchronized manner to the triggering AP.

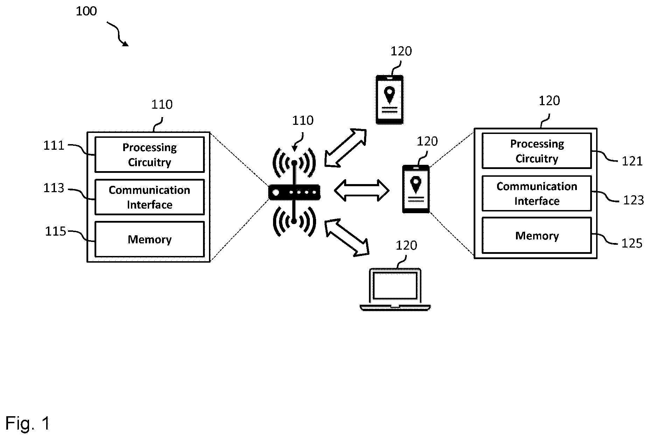

Figure 1 shows a wireless communication system 100 including an access point (AP) 110 configured to communicate with a plurality of associated non-AP stations 120, which together may define a BSS. As illustrated in figure 1 and as will be described in more detail below, the AP 110 comprises a processing circuitry or processor 111 and a communication interface 113, in particular a communication interface 113 in accordance with the 802.11 standards. The processing circuitry 111 may be implemented in hardware and/or software and may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The AP 110 may further comprise a memory 115 configured to store executable program code which, when executed by the processing circuitry 111, causes the AP 110 to perform the functions and methods described herein.

Likewise, the non-AP stations 120 may comprise a processing circuitry or processor 121 and a communication interface 123, in particular a communication interface 123 in accordance with the 802.11 standards. The processing circuitry 121 may be implemented in hardware and/or software and may comprise digital circuitry, or both analog and digital circuitry. Digital circuitry may comprise components such as application-specific integrated circuits (ASICs), field-programmable arrays (FPGAs), digital signal processors (DSPs), or general-purpose processors. Each non-AP station 120 may further comprise a memory 125 configured to store executable program code which, when executed by the processing circuitry 121, causes each non-AP station 120 to perform the functions and methods described herein.

As already described above, for handling interference the IEEE802.11be standard defines puncturing schemes that enable to transmit over a large bandwidth by excluding, i.e. puncturing only the affected subchannels. The puncturing granularity is 20 MHz, meaning that certain 20 MHz subchannels within the total bandwidth of the BSS may either be regarded as free or occupied depending on the received power level from the interference source(s) in those specific 20 MHz subchannels. IEEE802.11 defines power threshold levels for the primary and secondary 20 MHz subchannels that define when a 20MHz subchannel is regarded as busy or free due to a valid IEEE802.11, i.e. Wi-Fi signal or other non-Wi-Fi signals.

IEEE802.11be defines two possible puncturing patterns. A first puncturing pattern for EHT MU (OFDMA) enables individual puncturing patterns per every 80 MHz subblock in an EHT MU PPDU. The punctured subchannels over the entire bandwidth may not necessarily be contiguous. A second puncturing pattern for EHT MU (Non-OFDMA) enables only a single contiguous puncture within the entire bandwidth in an EHT MU PPDU. The puncturing pattern may consist of a single hole corresponding to a 20 MHz, 40 MHz or 80 MHz subchannel.

An OFDMA puncturing pattern is represented by a 4 bit bitmap per every 80 MHz subblock. Non-OFDMA applies to a PPDU transmitted to either a SU over the entire BW or to multiple users multiplexed as MU-MIMO over the entire BW. Non-OFDMA puncturing is represented by a 5 bit index field that points to one of the allowed puncturing patterns. The puncturing pattern index has a different meaning per BW. The total number of available patterns in the current 802.11be standard is 45.

According to IEEE802.11be, a transmission that uses the Non-HT-Duplicate PPDU format may puncture any of the 20 MHz subchannels that are indicated as busy by CCA and must prohibit the usage of the 20 MHz subchannels that were indicated as disallowed subchannels in the latest EHT Operation Element by the AP 110 using a disabled channels bitmap (also referred to as disabled subchannels bitmap herein). The puncturing of Non-HT-Duplicate PPDU is not required to adhere to neither the OFDMA nor the Non-OFDMA puncturing patterns.

According to IEEE802.11 channel access rules, in case puncturing is applied due to a Disabled Channels bitmap to a TX sequence that includes one or more PPDUs, the same subchannels, as indicated in the Disabled Channels bitmap must be punctured in all PPDUs.

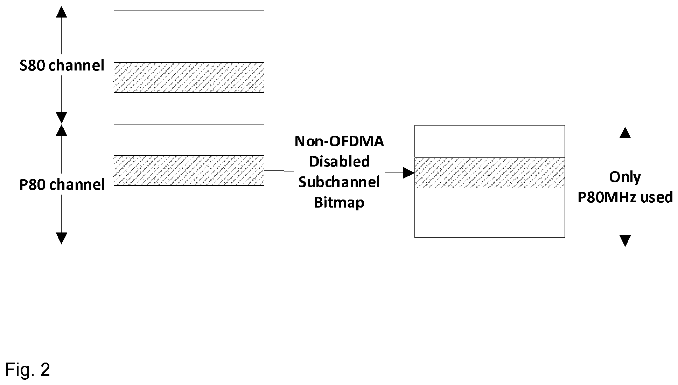

According to IEEE802.11be, the disabled channel bitmap must correspond to a non-OFDMA puncturing pattern. In addition, every subchannel that is indicated as disabled channel in the disabled channel bitmap is prohibited for any frame exchange by the AP 110 or by any member of the EHT BSS. According to the example illustrated in figure 2, the AP 110 operating with a bandwidth (BW) of 160 MHz may sense two 20 MHz subchannels as busy (interference), where, by way of example, one of them is located in the primary 80 MHz channel and the other one is located in the secondary 80 MHz channel. The only non-OFDMA puncturing pattern that is conventionally suitable in this scenario is a single 20MHz 'hole' in the primary 80 MHz portion of the 160 MHz bandwidth. Therefore, the actual bandwidth, in which the frame exchange is allowed, conventionally has to be reduced from 160 MHz to 80 MHz (giving up the secondary 80 MHz channel for any frame exchange). Thus, the example shown in figure 2, illustrates the excessive BW reduction that is caused by using the disabled channels bitmap with a non-OFDMA puncturing pattern in a conventional way.

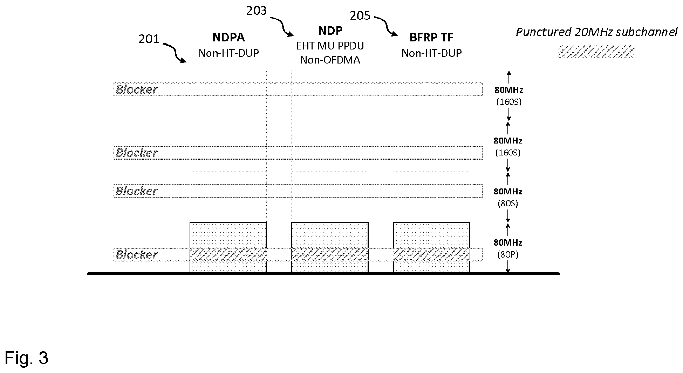

A slightly different scenario, which is affected by the conventional puncturing limitations in the disabled Channels bitmap described above, is illustrated in figure 3.. The AP 110 may wish to perform sounding for multi-user scheduling purposes and not directly for beamforming for a specific user, i.e. non-AP station 120 (in a defined RU). At this stage the AP 110 still hasn't decided which RU to allocate per user, i.e. non-AP station 120, hence it is interested in getting a full BW feedback from the non-AP STAs 120 rather than only a partial BW feedback. As can be taken from the example shown in figure 3, such type of sounding cannot be performed over the entire BW in the presence of non-contiguous 20 MHz blockers due to limiting the Sounding NDP puncturing to a non-OFDMA puncturing pattern only, thus reducing the effective BW from 320 MHz to 80 MHz and thereby the overall performance.

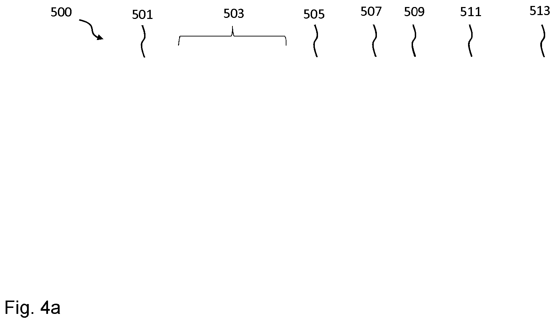

In the following embodiments the AP 110 and the non-AP stations 120 will be described in the context of figures 4a, 4b and 5 to 15 that address one or more of the drawbacks of the conventional puncturing schemes described above. In these embodiments the processing circuitry 111 of the AP 110 is configured to generate a sounding null data PPDU announcement, NDPA, frame 201, wherein the NDPA frame 201 comprises for each of the associated non-AP stations 120 a station info field 500. For embodiments disclosed herein it is assumed that the NDPA frame 201 as well as the following BFRP TF 205 are punctured according to the Non-HT-Duplicate rules specified in the IEEE802.11be standard.

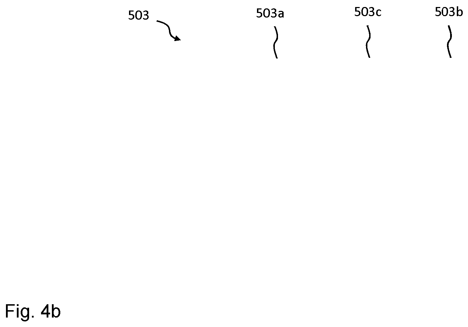

A first embodiment of a station field 500 of a NDPA frame generated by the processing circuitry 111 of the AP is illustrated in figures 4a and 4b. The station info field 500 comprises an identifier (referred to as AID11) of the respective associated non-AP station 120 as well as a partial BW info subfield 503. As can be taken from figure 4b, the partial BW info subfield 503 includes a feedback bitmap 503c as well as an indication of a resolution and/or a range of the feedback bitmap 503c with a 20 MHz or 40 MHz subchannel resolution for a Sounding NDP 203 with a bandwidth of up to 320 MHz.

In the embodiment shown in figures 4a and 4b the indication of the resolution and/or the range of the feedback bitmap 503c comprises a resolution bit 503a (e.g. bit B0 of the partial BW info subfield 503) and an extra resolution bit 503b (e.g. bit B9 of the partial BW info subfield 503). Thus, by means of the resolution bit 503a, the extra resolution bit 503b and the feedback bitmap 503c of the partial BW info subfield 503 the AP 110 may instruct the associated non-AP stations 120 in an EHT sounding sequence over which subcarriers to provide the beamforming feedback as well as the resolution and/or the range, i.e. the granularity of the feedback bitmap 503c. As will be appreciated, in comparison with a conventional partial BW info subfield, as defined by the current 802.11 standard, the partial BW info subfield 503 of the NDPA frame 201 generated by the AP according to an embodiment, is increased from 9 bits to 10 bits using some bit which is currently reserved (such as bit B20, as shown in the embodiment of figure 4a and 4b).

In addition to the identifier (AID11) 501 and the partial BW info subfield 503, the station info field 500 of the NDPA frame 201 may comprise the following fields, which are already known from the station info field of a conventional NDPA frame and, therefore, will not be described in greater detail herein: a Nc index field 505, a Feedback Type and Ng field 507, a Disambiguation field 509, a Codebook Size field 511 and a Reserved Bits field 513.

In an embodiment, the NDPA frame 201 further may comprise a disabled channel indication, for instance a disabled channel bitmap, wherein the disabled channel indication is indicative of a respective 20 MHz subchannel to be excluded in any further frames exchanged between the AP 110 and the non-AP stations 120 associated with the AP 110. In an embodiment, the disabled channel bitmap may be a 16 bit disabled channel bitmap. In an embodiment, the communication interface 113 of the AP is further configured to transmit a beacon frame to the associated non-AP stations 120, wherein the beacon frame comprises the disabled channel indication, e.g. the 16 bit disabled channel bitmap for identifying the 20 MHz subchannels to be excluded in any further frames exchanged between the AP 110 and the non-AP stations 120. In an embodiment, the communication interface 113 of the AP is configured to transmit the Sounding NDP 203 (succeeding the NDPA frame 201) to the associated non-AP stations 120 punctured in accordance with the disabled channel indication and optionally the feedback bitmap(s) 503c for associated non-AP stations 120 in the NDPA frame 201. Thus, in an embodiment, the puncturing of the Sounding NDP 201 is defined by the disabled channel indication, e.g. the 16 bit disabled channel bitmap, while the information provided in the partial BW info subfield 503 indicates on which subchannels the feedback will be measured. As will be appreciated, in an embodiment, the measurements and the feedback report generated by the non-AP STA apply only to channels that meet both of these requirements, i.e. (1) identified by the information provided in the partial BW info subfield 503 and (2) not excluded by the disabled channel indication, e.g. the 16 bit disabled channel bitmap.

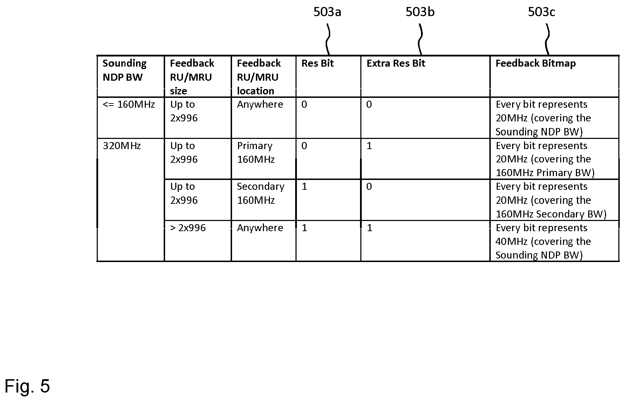

For the embodiment shown in figures 4a and 4b, the AP 110 may determine the resolution defined by the indication, e.g. the resolution bit 503a and the extra resolution bit 503b according to the rules specified in the table shown in figure 5 for a single STA info field. For instance, for the Sounding NDP 203 with a bandwidth of 320 MHz and the feedback RU/MRU located in the primary 160 MHz channel with a size smaller than or equal to 2x996 tones, a "zero" resolution bit 503a and a "one" extra resolution bit 503b defines that every bit of the feedback bitmap 503c represents a 20 MHz subchannel of the primary 160 MHz channel.

As already described above, the non-AP stations 120 may be configured to transmit, in response to receiving the Sounding NDP 203 followed by the BFRP TF 205 from the AP 110, a compressed beamforming feedback report, CBFR, frame to the AP 110, wherein the CBFR frame comprises a MIMO control field. In an embodiment, the MIMO control field may define or be part of a header of the CBFR frame.

According to embodiments disclosed herein the MIMO control field comprises a partial BW info subfield including a response feedback bitmap and an indication of the resolution and/or the range of the response feedback bitmap with a 20 MHz or 40 MHz subchannel resolution for the Sounding NDP 203 with a bandwidth of up to 320 MHz. In an embodiment, the indication of the resolution and/or the range of the response feedback bitmap may include a resolution bit and an extra resolution bit (similar to the embodiment described above). In an embodiment, the partial BW info subfield of the MIMO control field may be copied by each non-AP station 120 from the respective station info field of the NDPA frame 201.

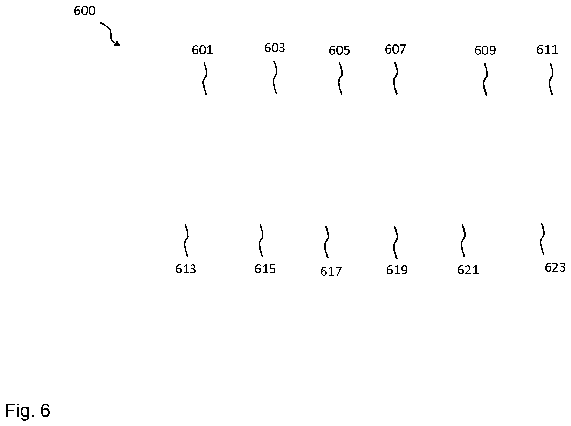

Figure 6 illustrates a MIMO control field 600 of a CBFR frame generated by a non-AP station 120 according to an embodiment. The partial BW info subfield 617 of the MIMO control field 600 comprises the response feedback bitmap. In an embodiment, the first bit B0 of the partial BW info subfield 617 of the MIMO control field 600 may define the resolution bit, while bits B1 to B8 of the partial BW info subfield 617 define the response feedback bitmap. As illustrated in figure 6, the extra resolution bit 623 may be defined by one of the reserved bits B37 to B39 of the currently standardized MIMO control field 600.

As illustrated in figure 6, in addition to the partial BW info subfield 617 and the extra resolution bit 623, the MIMO control field 600 of the CBFR frame may comprise the following fields, which are already known from the MIMO control field of a conventional CBFR frame and, therefore, will not be described in greater detail herein: a Nc index field 601, a Nr index field 603, a BW field 605, a Grouping field 607, a Feedback Type field 609, a Reserved Bits field 611, a Remaining Feedback Segments field 613, a First Feedback Segment field 615, a Sounding Dialog Token Number field 619, and a Codebook Information field 623.

In an embodiment, each associated non-AP station 120 may determine the resolution determined by the partial BW info subfield 617 and the extra resolution bit 623 of the MIMO control field 600 according to the rules specified in the table shown in figure 5.

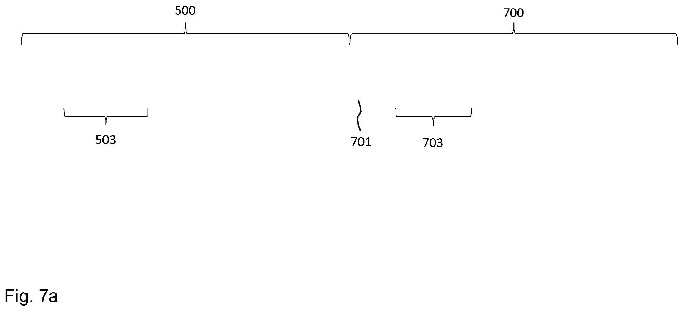

Figure 7a shows a further embodiment of the NDPA frame 201 generated and transmitted by the AP 110, wherein the NDPA frame 201 comprises, for each associated non-AP station 120, in addition to a first station info field 500 a further, i.e. second station info field 700 having the same identifier AID11 and the same size as the station info field 500. In the embodiment shown in figure 7a, the station info field 500 comprises an extended partial BW info subfield 503 and the further station info field 700 comprises an extended partial BW info subfield 703. The extended partial BW info subfield 503 comprises the resolution bit 503a (e.g. bit B0 of the extended partial BW info subfield 503), the feedback bitmap 503c (e.g. bits B1 to B8 of the extended partial BW info subfield 503) and an extra bit (e.g. bit B9 of the extended partial BW info subfield 503; referred to as "STA Info Num=0" in figure 7a) identifying the station info field 500 as the first station info field for the respective non-AP station 120. Likewise, the extended partial BW info subfield 703 comprises a resolution bit (e.g. bit B0 of the extended partial BW info subfield 703), a further feedback bitmap (e.g. bits B1 to B8 of the extended partial BW info subfield 703) and an extra bit (e.g. bit B9 of the extended partial BW info subfield 507; referred to as "STA Info Num=1" in figure 7a) identifying the station info field 700 as the second station info field for the respective non-AP station 120. Thus, in the embodiment shown in figure 7a, the resolution bit 503a of the extended partial BW info subfield 503, the resolution bit of the extended partial BW info subfield 703 and the further feedback bitmap of the extended partial BW info subfield 703 define the indication of the resolution and/or the range of the feedback bitmap 503c of the extended partial BW info subfield 503. As will be appreciated, for the embodiment of figure 7a, each non-AP station 120 may have to parse the entire NDPA frame 201 in order to determine whether the NDPA frame 201 contains two station info fields for the respective non-AP station 120.

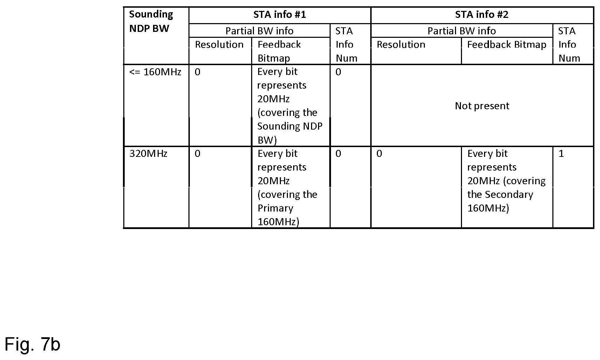

For the embodiment shown in figure 7a, the AP 110 may determine the resolution defined by the indication, e.g. the resolution bit of the station info field 500 and the resolution bit and the further feedback bitmap of the further station info field 700 according to the rules specified in the table shown in figure 7b.

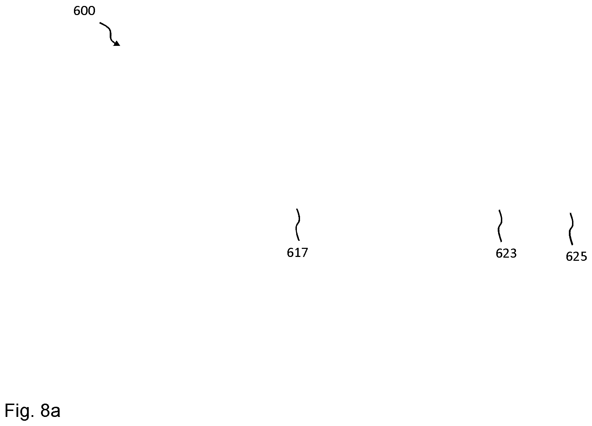

Figure 8a illustrates a variant of the MIMO control field 600 of figure 6 of a CBFR frame generated by a non-AP station 120 according to an embodiment. In the embodiment shown in figure 8a, a bit which is currently reserved in the MIMO Control field 600 (for example bit B37) is used to indicate that the MIMO control field 600 further comprises an extended partial BW info subfield 625 (for instance, additional bits B40 to B47). As will be appreciated, in comparison with a conventional MIMO control field in this embodiment the MIMO control field 600 may be increased from 5 to 6 octets/bytes.

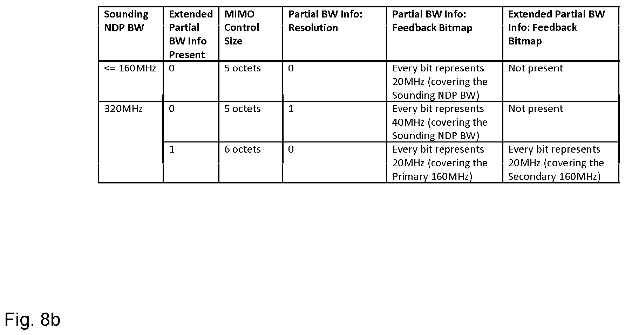

For the embodiment shown in figure 8a, each associated non-AP station 120 may determine the resolution according to the rules specified in the table shown in figure 8b.

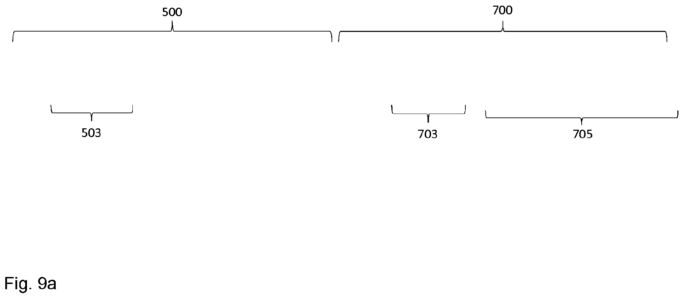

Figure 9a shows a further embodiment of the NDPA frame 201 generated and transmitted by the AP 110, wherein the NDPA frame 201 comprises, for one or more associated non-AP station 120s, in addition to a first station info field 500 a further, i.e. second station info field 700 having the same identifier AID11 and the same size as the station info field 500. In the embodiment shown in figure 9a, the first station info field 500 comprises an extended partial BW info subfield 503. The extended partial BW info subfield 503 comprises an extra bit (e.g. bit B20) indicating whether for the first station info field 500 identified by the identifier AID11, this NDPA frame 201 also comprises the second station info field 700. The second station info field 700 comprises an extended partial BW info subfield 705, including a dummy partial BW info field indicating to each non-AP station 120 that the second station info field 700 is corresponding to the first station info field 500. Moreover, in this as well as further embodiments described below, the extended partial BW info subfield 703 may comprise a reserved field. In an embodiment, this reserved field may include the additional STA Info Present field. In the embodiment shown in figure 9a, the second station info field 700 (identified by the dummy partial BW info field) moreover comprises the further feedback bitmap 705 (e.g. bits B24 to B31 of the second station info field 700).

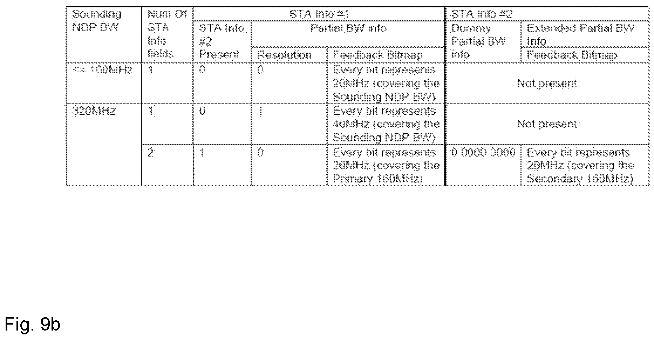

For the embodiment shown in figure 9a, the AP 110 may set the resolution according to the rules specified in the table shown in figure 9b. For instance, for a bandwidth of the Sounding NDP 203 of 320 MHz and with the first station info field 500 and the second station info field 700 (identified, for instance, by the dummy partial BW info field "0 0000 0000") present, every bit of the feedback bitmap of the first station info field 500 represents a 20 MHz subchannel of the primary 160 MHz channel and every bit of the further feedback bitmap of the second station info field 700 represents a 20 MHz subchannel of the secondary 160 MHz channel. For this embodiment, each non-AP station 120 may be configured to generate the MIMO control field 600 as already has been described in the context of figures 8a and 8b.

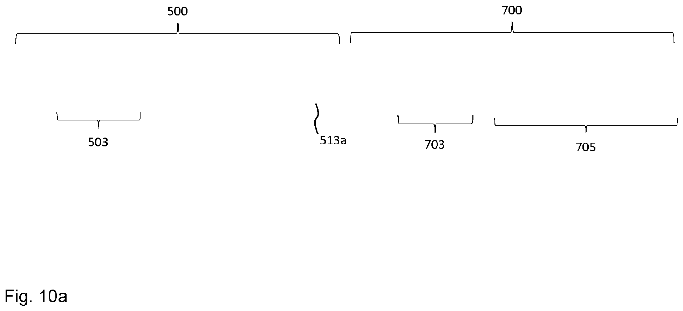

Figure 10a shows a further embodiment of the NDPA frame 201 generated and transmitted by the AP 110, wherein the NDPA frame 201 comprises, for each associated non-AP station 120, in addition to a first station info field 500 a further, i.e. second station info field 700 having the same identifier AID11 and the same size as the station info field 500. In comparison with the embodiment shown in figure 9a, the first station info field 500 of the embodiment shown in figure 10a further comprises a bit 513a (e.g. bit B29 of the first station info field 500) for indicating the presence of the second station info field 700. The extended partial BW info subfield 503 may be configured as in the embodiment of figures 5a and 5b, i.e. the extended partial BW info subfield 503 may comprise the resolution bit 503a (e.g. bit B0 of the partial BW info subfield 503), the feedback bitmap 503c (e.g. bits B1-B8 of the partial BW info subfield 503) and the extra resolution bit 503b (e.g. bit B9 of the partial BW info subfield 503). The second station info field 700 may be configured as in the embodiment of figure 9a described above.

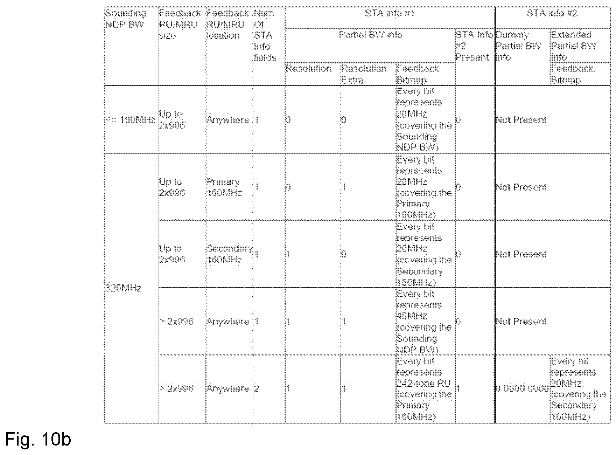

For the embodiment shown in figure 10a, the AP 110 may determine the resolution according to the rules specified in the table shown in figure 10b. For instance, for a bandwidth of the Sounding NDP 203 of 320 MHz, a size of the feedback RU/MRU larger than 2x996 tones, and with the first station info field 500 and the second station info field 700 (identified, for instance, by the dummy partial BW info field "0 0000 0000") present, a "one" resolution bit 503a and a "one" extra resolution bit 503b defines that every bit of the feedback bitmap of the first station info field 500 represents a 242-tone RU, i.e. a 20 MHZ subchannel of the primary 160 MHz channel and every bit of the further feedback bitmap of the second station info field 700 represents a 242-tone RU, i.e. a 20 MHZ subchannel of the secondary 160 MHz channel.

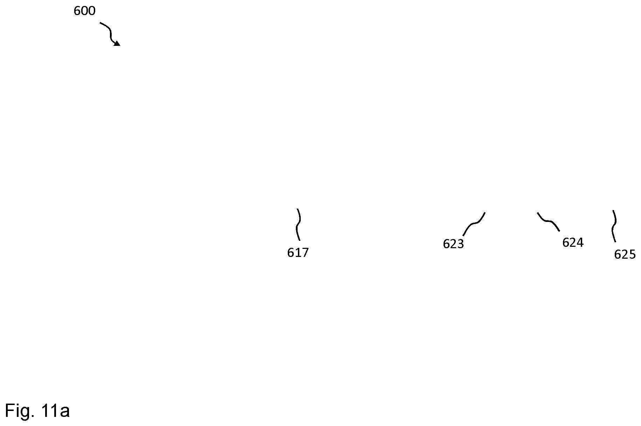

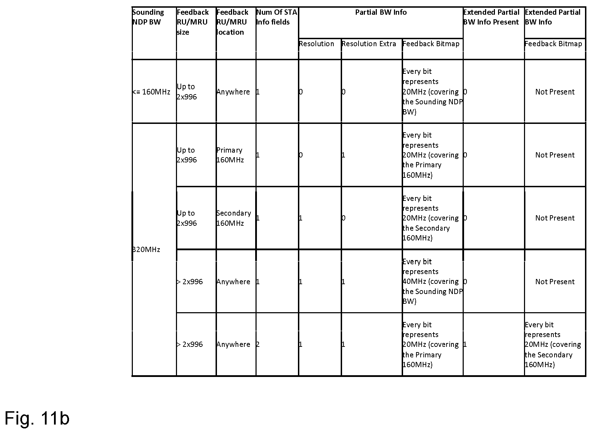

Figure 11a illustrates a further variant of the MIMO control field 600 of figure 8a of a CBFR frame generated by a non-AP station 120 according to an embodiment. In comparison with the MIMO control field 600 of the embodiment shown in figure 8a, the currently reserved bits comprise the extra resolution bit (e.g. currently reserved bit B37 of the MIMO control field 600) and the bit (e.g. currently reserved bit B38 of the MIMO control field 600) indicating the presence of the extended partial BW info subfield 625 (for instance, additional bits B40 to B47). For this embodiment, each associated non-AP station 120 may determine the resolution according to the rules specified in the table shown in figure 11b.

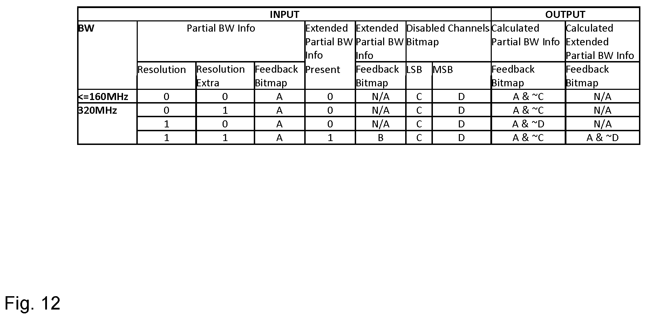

The following further embodiments describe ways to calculate the required 20MHz subchannel in which feedback is requested even for the case that this subchannel does not refer to a valid RU/MRU, considering the disabled subchannels indication, e.g. the disabled channels bitmap. This is mainly required in case the sounding procedure is done for the purpose of scheduling (where the allocated RU/MRU per STA is not defined). In an embodiment, this may be achieved by implementing the rules listed in the table shown in figure 12 in the AP 110 and/or the associated non-AP station 120, as will be described in more detail in the context of two examples below. For the table shown in figure 12 the following definitions hold:
A, B, C, D are all 8 bit binary values.

The symbol "~" represents the following bit wise NOT operation:
In=0, Out=1
In=1, Out=0

The symbol "&" represents the following bit wise AND operation:
In1 =0, In2=0, Out=0
In1 =0, In2=1, Out=0
In1 =1, In2=0, Out=0
In1=1, In2=1, Out=1

The LSB of the disabled channels bitmap represents bits B0-B7 of the full field.

The MSB of the disabled channels bitmap represents bits B8-B15 of the full field.

### Example 1:

| | |
|---|---|
| • Resolution bit | 1 |
| • Resolution Extra bit | 1 |
| • Extended Partial BW Info Present | 1 |
| • Partial BW info: Feedback Bitmap | 1111 0000 |
| • Extended Partial BW info: Feedback Bitmap | 1111 1111 |
| • Disabled Channels Bitmap | 0100 0000 0010 0001 |
| • Calculated Partial BW info: Feedback Bitmap | 1011 0000 |
| • Calculated Extended Partial BW info: Feedback Bitmap | 1101 1110 |

### Example 2:

| | |
|---|---|
| • Resolution bit | 0 |
| • Resolution Extra bit | 1 |
| • Extended Partial BW Info Present | 0 |
| • Partial BW info: Feedback Bitmap | 1111 1100 |
| • Extended Partial BW info: Feedback Bitmap | N/A |
| • Disabled Channels Bitmap | 0000 0000 0100 0000 |
| • Calculated Partial BW info: Feedback Bitmap | 1011 1100 |
| • Calculated Extended Partial BW info: Feedback Bitmap | N/A |

As a result of implementing the rules listed in the table shown in figure 12, the values of the effective Calculated Feedback Bitmap in either Calculated Partial BW info or Calculated Extended Partial BW info may obtain any value (between 00000000-11111111) and shall not be limited to the values of valid RU/MRU that are currently supported by the standard. In an embodiment, the number of used bits in the feedback bitmap is determined according to the bandwidth (i.e. not all combinations may be possible in all cases). The calculation of the feedback bitmap values for the Calculated Partial BW info or Calculated Extended Partial BW info may be performed in two optional ways, which will be described in more detail in the following.

According to a first option (referred to as Option A), the AP 110 applies the feedback bitmap values in the partial BW info (and extended partial BW info if applicable) in the station info field of the NDPA frame 201 according to the rules described for the embodiment of figure 9b above. The AP 100 can set the Partial BW Info for any required 20 MHz subchannel pattern. The AP 100 generates the Disabled Channels Bitmap in the NDPA frame 201 or in the Beacon frame. Each non-AP station 120 determines the effective feedback bitmap for the Calculated Partial BW info (and Calculated Extended Partial BW info if applicable) as defined by the table shown in figure 12 and sets them in the MIMO control field 600.

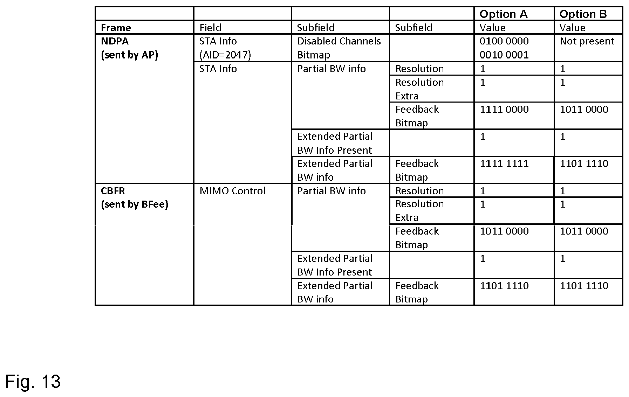

According to a second option (referred to as Option B), the AP 110 defines the Feedback Bitmap values for the Partial BW info (and Extended Partial BW info if applicable) according to the rules described for the embodiment of figure 9b above. The AP 110 may puncture the Sounding NDP 203 and/or include the Disabled Channels Bitmap in the NDPA frame 201 or in the Beacon frame. If the Disabled Channels Bitmap is indicated in the Beacon frame or in the preceding NDPA frame 201, the Sounding NDP 203 must be punctured in accordance with the Disabled Channels Bitmap. The AP 110 calculates the Feedback Bitmap for the Calculated Partial BW info (and Calculated Extended Partial BW info if applicable) per every non-AP station 120 included in the NDPA frame 201, as defined by the table shown in figure 12, and sets them in the Partial BW info field (and the Extended Partial BW Info field, if applicable) for that applicable station info fields of the NDPA frame 201. Each non-AP station 120 responds with the same feedback bitmap values for the Partial BW info (and Extended Partial BW info if applicable) in the MIMO control field 600, as specified by the AP 110 in the applicable station info field of the NDPA frame 201. The table shown in figure 13 shows an example of the operation of the AP 110 and each non-AP station 120 for the two options, i.e. Option A and Option B.

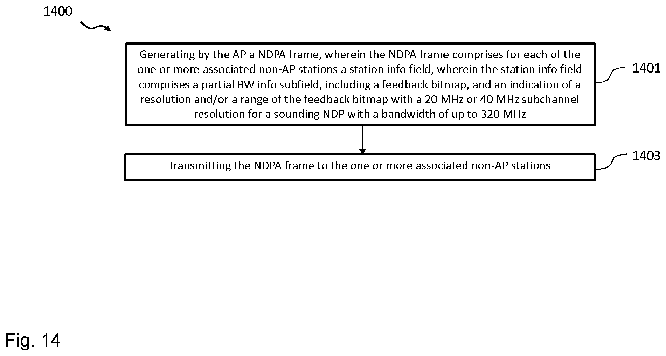

Figure 14 is a flow diagram illustrating a method 1400 of performing a sounding procedure between the AP 110) and the associated non-AP stations 120 in the wireless local area network 100. The method 1400 comprises a step 1401 of generating by the AP 110 a NDPA frame, wherein the NDPA frame comprises for each associated non-AP station 120 a station info field 500, wherein the station info field 500 comprises a partial BW info subfield 503, including a feedback bitmap 503c and an indication 503a,b of a resolution and/or a range of the feedback bitmap 503c with a 20 MHz or 40 MHz subchannel resolution for a Sounding NDP 203 with a bandwidth of up to 320 MHz. Moreover, the method 1400 comprises a step 1403 of transmitting the NDPA frame 201 to the associated non-AP stations 120.

In an embodiment, the method 1400 further comprises transmitting the Sounding NDP 203 to the associated non-AP stations 120 punctured in accordance with the disabled channel indication, e.g. the disabled channel bitmap described above and optionally punctured according to the feedback bitmap(s) 503c for the associated non-AP stations 120 in the NDPA frame 201.

In an embodiment, the method 1400 further comprises transmitting a BFRP trigger frame in order to receive from each associated non-AP station 120 that was included in the preceding NDPA, a CBFR frame, wherein the CBFR frame comprises a MIMO control field 600, wherein the MIMO control field 600 comprises a partial BW info subfield 617, including a response feedback bitmap, and an indication 623 of a resolution and/or a range of the response feedback bitmap with a 20 MHz or 40 MHz subchannel resolution for the Sounding NDP 203 with a bandwidth of up to 320 MHz.

As the method 1400 can be implemented by the AP 110, further features of the method 1400 result directly from the functionality of the AP 110 and its different embodiments described above and below.

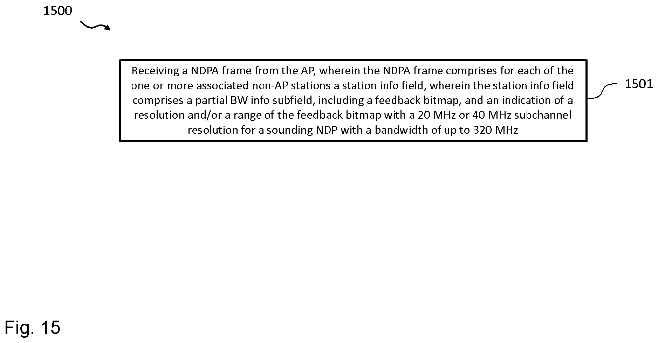

Fig. 15 is a flow diagram illustrating a method 1500 of performing a sounding procedure between each non-AP station 120 and the associated AP 110 in the wireless local area network 100. The method 1500 comprises a step 1501 of receiving a NDPA frame 201 from the AP 110, wherein the NDPA frame 201 comprises a station info field 500, which includes the identification (501) of the non-AP station 120, wherein the station info field 500 comprises a partial BW info subfield 503, including a feedback bitmap 503c and an indication 503a,b of a resolution and/or a range of the feedback bitmap 503c with a 20 MHz or 40 MHz subchannel resolution for a Sounding NDP 203 with a bandwidth of up to 320 MHz.

In an embodiment, the method 1500 further comprises receiving the Sounding NDP 203 from the AP 110 and measuring one or more parameters of the required 20 MHz subchannels.

In an embodiment, the method 1500 further comprises generating a feedback report with a MIMO control field 600 reflecting the exact feedback indication performed by the non-AP station 120.

In an embodiment, the method 1500 further comprises receiving a beamforming report poll, BFRP, 205 from the AP 110 and transmitting a compressed beamforming feedback report, CBFR, frame to the AP 110 in accordance with one or more parameters included in the BFRP 205.

As the method 1500 can be implemented by the non-AP stations 120, further features of the method 1500 result directly from the functionality of the non-AP stations 120 and their different embodiments described above and below.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments disclosed herein may be integrated into one processing unit, or each of the units may exist alone physically, or two or more units are integrated into one unit.

## Claims

1. A method (1400) of performing a sounding procedure between an access point, AP (110), and one or more associated non-AP stations (120) in a wireless local area network (100), wherein the method (1400) is performed by the AP and comprises:
generating (1401) a Null Data PPDU announcement, NDPA, frame (201) by the AP (110), wherein the NDPA frame (201) comprises for each of the one or more associated non-AP stations (120) a station info field (500), wherein the station info field (500) comprises a partial BW info subfield (503), including a feedback bitmap (503c) and an indication (503a,b) of a resolution and/or a range of the feedback bitmap (503c) with a 20 MHz or 40 MHz subchannel resolution for a Sounding NDP (203) with a bandwidth of up to 320 MHz;
transmitting (1403) the NDPA frame (201) to the one or more associated non-AP stations (120); and
wherein the method is **characterized by** transmitting a beacon frame to the one or more associated non-AP stations (120), wherein the beacon frame comprises a disabled channel indication, and wherein the disabled channel indication is indicative of one or more respective 20 MHz subchannels to be excluded in any further frames exchanged between the AP (110) and the one or more non-AP stations (120) associated with the AP (110).

2. The method (1400) of claim 1, wherein the NDPA frame (201) further comprises a disabled channel indication, wherein the disabled channel indication is indicative of one or more respective 20 MHz subchannels to be excluded in any further frames exchanged between the AP (110) and the one or more non-AP stations (120) associated with the AP (110).

3. The method (1400) of claim 1, wherein measurements and a feedback report generated by the non-AP STA apply only to channels that meet both (1) identified by the information provided in the partial BW info subfield (503) and (2) not excluded by the disabled channel indication.

4. The method (1400) of claim 2 or 3, wherein the method (1400) further comprises setting the feedback bitmap in the NDPA frame (201) based on the disabled channel indication.

5. The method (1400) of claim 2 or 3, wherein the method (1400) further comprises transmitting the Sounding NDP (203) to the one or more associated non-AP stations (120) punctured in accordance with the disabled channel indication and optionally punctured in accordance with the one or more feedback bitmaps (503c) for the one or more associated non-AP stations (120) in the NDPA frame (201).

6. The method (1400) of claim 5, wherein the method (1400) further comprises receiving from each of the one or more associated non-AP stations (120) that were included in the preceding NDPA frame (201) a compressed beamforming feedback report, CBFR, frame, wherein the CBFR frame comprises a MIMO control field (600), wherein the MIMO control field (600) comprises a partial BW info subfield (617), including a response feedback bitmap, and an indication (623) of a resolution and/or a range of the response feedback bitmap with a 20 MHz or 40 MHz subchannel resolution for the Sounding NDP (203) with a bandwidth of up to 320 MHz and an indication for the presence of the further feedback bitmap.

7. A method (1500) of performing a sounding procedure between a non-access point, non-AP, station (120) and an associated AP (110) in a wireless local area network (100), wherein the method (1500) is performed by the non-AP station and comprises:
receiving (1501) a null data PPDU announcement, NDPA, frame (201) from the AP (110), wherein the NDPA frame (201) comprises a station info field (500), wherein the station info field (500), which includes an identification (501) of the non-AP station (120), comprises a partial BW info subfield (503), including a feedback bitmap (503c) and an indication (503a,b) of a resolution and/or a range of the feedback bitmap (503c) with a 20 MHz or 40 MHz subchannel resolution for a Sounding NDP (203) with a bandwidth of up to 320 MHz; and
wherein the method is **characterized by** receiving a beacon frame, wherein the beacon frame comprises a disabled channel indication, wherein the disabled channel indication is indicative of one or more respective 20 MHz subchannels to be excluded in any further frames exchanged between the AP (110) and the one or more non-AP stations (120) associated with the AP (110).

8. The method (1500) of claim 7, wherein the method (1500) further comprises receiving the Sounding NDP (203) from the AP (110) and measuring one or more parameters of the required 20 MHz subchannels.

9. The method (1500) of claim 7 or 8, wherein the method (1500) further comprises generating a feedback report with a MIMO control field (600) reflecting a feedback indication performed by the non-AP station (120).

10. The method (1500) of any one of claims 7 to 9, wherein the method (1500) further comprises receiving a beamforming report poll, BFRP, (205) from the AP (110) and transmitting a compressed beamforming feedback report, CBFR, frame to the AP (110) in accordance with one or more parameters included in the BFRP (205).

11. An access point, AP (110), wherein the AP comprises a processor and a communication interface, and the processor is configured to perform the method of any of claims 1 to 6.

12. A non-access point, non-AP, station (120), wherein the non-AP station comprises a processor and a communication interface, and the processor is configured to perform the method of any of claims 7 to 10.

13. A computer program product comprising instructions which, when the program is executed by a computer, cause the computer to carry out the method of any of claims 1 to 10.

14. A computer-readable storage medium comprising instructions which, when executed by a computer, cause the computer to carry out the method of any of claims 1 to 10.

## Patentansprüche

1. Verfahren (1400) zum Durchführen einer Peilungsprozedur zwischen einem Zugriffspunkt, AP (110), und einer oder mehreren assoziierten Nicht-AP-Stationen (120) in einem drahtlosen lokalen Netzwerk (100), wobei das Verfahren (1400) durch den AP durchgeführt wird und Folgendes umfasst:
Generieren (1401) eines Null Data PPDU-Ankündigungs-Frames, NDPA-Frame, (201) durch den AP (110), wobei der NDPA-Frame (201) für jede der einen oder mehreren assoziierten Nicht-AP-Stationen (120) ein Stationsinfofeld (500) umfasst, wobei das Stationsinfofeld (500) ein partielles BW-Infounterfeld (503) umfasst, das eine Feedback-Bitmap (503c) und eine Anzeige (503a,b) einer Auflösung und/oder eines Bereichs der Feedback-Bitmap (503c) mit einer Unterkanalauflösung von 20 MHz oder 40 MHz für ein Peilungs-NDP (203) mit einer Bandbreite von bis zu 320 MHz beinhaltet;
Übertragen (1403) des NDPA-Frames (201) an die eine oder die mehreren assoziierten Nicht-AP-Stationen (120); und
wobei das Verfahren durch Übertragen eines Beacon-Frames an die eine oder mehreren assoziierten Nicht-AP-Stationen (120) gekennzeichnet ist, wobei der Beacon-Frame eine Anzeige für deaktivierte Kanäle umfasst, und wobei die Anzeige für deaktivierte Kanäle auf einen oder mehrere jeweilige 20 MHz-Unterkanäle hinweist, die in beliebigen weiteren Frames, die zwischen dem AP (110) und der einen oder den mehreren Nicht-AP-Stationen (120), die mit dem AP (110) assoziiert sind, ausgetauscht werden, auszuschließen sind.

2. Verfahren (1400) nach Anspruch 1, wobei der NDPA-Frame (201) ferner eine Anzeige für deaktivierte Kanäle umfasst, wobei die Anzeige für deaktivierte Kanäle auf einen oder mehrere jeweilige 20 MHz-Unterkanäle hinweist, die in beliebigen weiteren Frames, die zwischen dem AP (110) und der einen oder den mehreren Nicht-AP-Stationen (120), die mit dem AP (110) assoziiert sind, ausgetauscht werden, auszuschließen sind.

3. Verfahren (1400) nach Anspruch 1, wobei Messungen und ein durch die Nicht-AP-STA generierter Feedback-Bericht nur für Kanäle gelten, die sowohl (1) durch die in dem partiellen BW-Infounterfeld (503) bereitgestellten Informationen identifiziert werden, als auch (2) durch die Anzeige für deaktivierte Kanäle nicht ausgeschlossen sind.

4. Verfahren (1400) nach Anspruch 2 oder 3, wobei das Verfahren (1400) ferner das Einstellen der Feedback-Bitmap in dem NDPA-Frame (201) basierend auf der Anzeige für deaktivierte Kanäle umfasst.

5. Verfahren (1400) nach Anspruch 2 oder 3, wobei das Verfahren (1400) ferner das Übertragen des Peilungs-NDP (203) an die eine oder die mehreren assoziierten Nicht-AP-Stationen (120) umfasst, die gemäß der Anzeige für deaktivierte Kanäle punktiert sind und optional gemäß dem einen oder den mehreren Feedback-Bitmaps (503c) für die eine oder die mehreren assoziierten Nicht-AP-Stationen (120) in dem NDPA-Frame (201) punktiert sind.

6. Verfahren (1400) nach Anspruch 5, wobei das Verfahren (1400) ferner das Empfangen eines Frames des komprimierten Feedback-Berichts über Strahlformung, CBFR-Frame, von jeder der einen oder der mehreren assoziierten Nicht-AP-Stationen (120), die in dem vorhergehenden NDPA-Frame (201) enthalten waren, umfasst, wobei der CBFR-Frame ein MIMO-Steuerfeld (600) umfasst, wobei das MIMO-Steuerfeld (600) ein partielles BW-Infounterfeld (617) umfasst, das eine Antwort-Feedback-Bitmap und eine Anzeige (623) einer Auflösung und/oder eines Bereichs der Antwort-Feedback-Bitmap mit einer Unterkanalauflösung von 20 MHz oder 40 MHz für das Peilungs-NDP (203) mit einer Bandbreite von bis zu 320 MHz und eine Anzeige für das Vorhandensein der weiteren Feedback-Bitmap umfasst.

7. Verfahren (1500) zum Durchführen einer Peilungsprozedur zwischen einer Nicht-Zugriffspunkt-Station, Nicht-AP-Station, (120) und einem assoziierten AP (110) in einem drahtlosen lokalen Netzwerk (100), wobei das Verfahren (1500) durch die Nicht-AP-Station durchgeführt wird und Folgendes umfasst:
Empfangen (1501) eines Null Data PPDU-Ankündigungs-Frames, NDPA-Frame, (201) von dem AP (110), wobei der NDPA-Frame (201) ein Stationsinfofeld (500) umfasst, wobei das Stationsinfofeld (500), welches eine Identifikation (501) der Nicht-AP-Station (120) beinhaltet, ein partielles BW-Infounterfeld (503) umfasst, das eine Feedback-Bitmap (503c) und eine Anzeige (503a,b) einer Auflösung und/oder eines Bereichs der Feedback-Bitmap (503c) mit einer Unterkanalauflösung von 20 MHz oder 40 MHz für ein Peilungs-NDP (203) mit einer Bandbreite von bis zu 320 MHz beinhaltet; und
wobei das Verfahren durch, Empfangen eines Beacon-Frames gekennzeichnet ist, wobei der Beacon-Frame eine Anzeige für deaktivierte Kanäle umfasst, wobei die Anzeige für deaktivierte Kanäle auf einen oder mehrere jeweilige 20 MHz-Unterkanäle hinweist, die in beliebigen weiteren Frames, die zwischen dem AP (110) und der einen oder den mehreren Nicht-AP-Stationen (120), die mit dem AP (110) assoziiert sind, ausgetauscht werden, auszuschließen sind.

8. Verfahren (1500) nach Anspruch 7, wobei das Verfahren (1500) ferner das Empfangen des Peilungs-NDP (203) von dem AP (110) und das Messen eines oder mehrerer Parameter der erforderlichen 20 MHz-Unterkanäle umfasst.

9. Verfahren (1500) nach Anspruch 7 oder 8, wobei das Verfahren (1500) ferner das Generieren eines Feedback-Berichts mit einem MIMO-Steuerfeld (600) umfasst, das eine durch die Nicht-AP-Station (120) durchgeführte Feedback-Anzeige widerspiegelt.

10. Verfahren (1500) nach einem der Ansprüche 7 bis 9, wobei das Verfahren (1500) ferner das Empfangen eines Beamforming Report Poll, BFRP, (205) von dem AP (110) und das Übertragen eines komprimierten Frames des Feedback-Berichts über Strahlformung, CBFR-Frame, an den AP (110) gemäß einem oder mehreren in dem BFRP (205) enthaltenen Parametern umfasst.

11. Zugriffspunkt, AP (110), wobei der AP einen Prozessor und eine Kommunikationsschnittstelle umfasst, und der Prozessor dazu konfiguriert ist, das Verfahren nach einem der Ansprüche 1 bis 6 durchzuführen.

12. Nicht-Zugriffspunkt-Station, Nicht-AP-Station (120), wobei die Nicht-AP-Station einen Prozessor und eine Kommunikationsschnittstelle umfasst, und der Prozessor dazu konfiguriert ist, das Verfahren nach einem der Ansprüche 7 bis 10 durchzuführen.

13. Computerprogrammprodukt, umfassend Anweisungen, welche bei Ausführung des Programms durch einen Computer bewirken, dass der Computer das Verfahren nach einem der Ansprüche 1 bis 10 durchführt.

14. Computerlesbares Speichermedium, umfassend Anweisungen, die bei Ausführung durch einen Computer bewirken, dass der Computer das Verfahren nach einem der Ansprüche 1 bis 10 durchführt.

## Revendications

1. Procédé (1400) de réalisation d'une procédure de sondage entre un point d'accès, AP (110), et une ou plusieurs stations non AP associées (120) dans un réseau local sans fil (100), dans lequel le procédé (1400) est réalisé par l'AP et comprend :
la génération (1401) d'une trame d'annonce PPDU de données nulles, NDPA (201), par l'AP (110), dans lequel la trame NDPA (201) comprend pour chacune des une ou plusieurs stations non AP associées (120) un champ d'informations de station (500), dans lequel le champ d'informations de station (500) comprend un sous-champ d'informations BW partiel (503), comportant une bitmap de rétroaction (503c) et une indication (503a, b) d'une résolution et/ou d'une plage de la bitmap de rétroaction (503c) avec une résolution de sous-canal de 20 MHz ou 40 MHz pour un NDP de sondage (203) avec une bande passante allant jusqu'à 320 MHz ;
la transmission (1403) de la trame NDPA (201) aux une ou plusieurs stations non AP associées (120) ; et dans lequel le procédé est **caractérisé par**
la transmission d'une trame de balise aux une ou plusieurs stations non AP associées (120), dans lequel la trame de balise comprend une indication de canal désactivé, et dans lequel l'indication de canal désactivé indique un ou plusieurs sous-canaux respectifs de 20 MHz à exclure dans toute trame supplémentaire échangée entre l'AP (110) et les une ou plusieurs stations non AP (120) associées à l'AP (110).

2. Procédé (1400) selon la revendication 1, dans lequel la trame NDPA (201) comprend également une indication de canal désactivé, dans lequel l'indication de canal désactivé indique un ou plusieurs sous-canaux respectifs de 20 MHz à exclure dans toute autre trame échangée entre l'AP (110) et les une ou plusieurs stations non AP (120) associées à l'AP (110).

3. Procédé (1400) selon la revendication 1, dans lequel des mesures et un rapport de rétroaction générés par la STA non AP s'appliquent uniquement aux canaux qui sont à la fois (1) identifiés par les informations fournies dans le sous-champ d'informations BW partiel (503) et (2) non exclus par l'indication de canal désactivé.

4. Procédé (1400) selon la revendication 2 ou 3, dans lequel le procédé (1400) comprend également la définition de la bitmap de rétroaction dans la trame NDPA (201) sur la base de l'indication de canal désactivé.

5. Procédé (1400) selon la revendication 2 ou 3, dans lequel le procédé (1400) comprend également la transmission du NDP de sondage (203) aux une ou plusieurs stations non-AP associées (120) perforées conformément à l'indication de canal désactivé et éventuellement perforées conformément aux une ou plusieurs bitmaps de rétroaction (503c) pour les une ou plusieurs stations non-AP associées (120) dans la trame NDPA (201).

6. Procédé (1400) selon la revendication 5, dans lequel le procédé (1400) comprend également la réception, de chacune des une ou plusieurs stations non AP associées (120) qui étaient incluses dans la trame NDPA précédente (201), d'une trame de rapport de rétroaction de formation de faisceau compressée, CBFR, dans lequel la trame CBFR comprend un champ de commande MIMO (600), dans lequel le champ de commande MIMO (600) comprend un sous-champ d'informations BW partiel (617), comportant une bitmap de rétroaction de réponse, et une indication (623) d'une résolution et/ou d'une plage de la bitmap de rétroaction de réponse avec une résolution de sous-canal de 20 MHz ou 40 MHz pour le NDP de sondage (203) avec une bande passante allant jusqu'à 320 MHz et une indication de la présence de la bitmap de rétroaction supplémentaire.

7. Procédé (1500) de réalisation d'une procédure de sondage entre une station de point non-accès, non-AP (120), et un AP associé (110) dans un réseau local sans fil (100), dans lequel le procédé (1500) est réalisé par la station non-AP et comprend :
la réception (1501) d'une trame d'annonce PPDU de données nulles, NDPA (201) de l'AP (110), dans lequel la trame NDPA (201) comprend un champ d'informations de station (500), dans lequel le champ d'informations de station (500), qui comporte une identification (501) de la station non-AP (120), comprends un sous-champ d'informations BW partiel (503), comportant une bitmap de rétroaction (503c) et une indication (503a, b) d'une résolution et/ou d'une plage de la bitmap de rétroaction (503c) avec une résolution de sous-canal de 20 MHz ou 40 MHz pour un NDP de sondage (203) avec une bande passante allant jusqu'à 320 MHz ; et dans lequel le procédé est **caractérisé par**
la réception d'une trame de balise, dans lequel la trame de balise comprend une indication de canal désactivé, dans lequel l'indication de canal désactivé indique un ou plusieurs sous-canaux respectifs de 20 MHz à exclure dans toute autre trame échangée entre l'AP (110) et les une ou plusieurs stations non AP (120) associées à l'AP (110).

8. Procédé (1500) selon la revendication 7, dans lequel le procédé (1500) comprend également la réception du NDP de sondage (203) de l'AP (110) et la mesure d'un ou plusieurs paramètres des sous-canaux de 20 MHz requis.

9. Procédé (1500) selon la revendication 7 ou 8, dans lequel le procédé (1500) comprend également la génération d'un rapport de rétroaction avec un champ de commande MIMO (600) reflétant une indication de rétroaction réalisée par la station non AP (120).

10. Procédé (1500) selon l'une quelconque des revendications 7 à 9, dans lequel le procédé (1500) comprend également la réception d'un sondage de rapport de formation de faisceau, BFRP, (205) de l'AP (110) et la transmission d'une trame de rapport de rétroaction de formation de faisceau compressée, CBFR, à l'AP (110) conformément à un ou plusieurs paramètres inclus dans le BFRP (205).

11. Point d'accès, AP (110), dans lequel l'AP comprend un processeur et une interface de communication, et le processeur est configuré pour réaliser le procédé selon l'une quelconque des revendications 1 à 6.

12. Station de point de non-accès, non-AP (120), dans laquelle la station non-AP comprend un processeur et une interface de communication, et le processeur est configuré pour réaliser le procédé selon l'une quelconque des revendications 7 à 10.

13. Produit de programme informatique comprenant des instructions qui, lorsque le programme est exécuté par un ordinateur, amènent l'ordinateur à mettre en œuvre le procédé selon l'une quelconque des revendications 1 à 10.

14. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 10.
